# EUROPÄISCHE PATENTSCHRIFT

(11) **EP 2 148 101 B1**
(45) Veröffentlichungstag und Bekanntmachung des Hinweises auf die Patenterteilung: **15.02.2012**
(21) Anmeldenummer: 09006352.0
(22) Anmeldetag: 11.05.2009
(51) Int. Cl.: F16C 3/03

(54) **Wellenanordnung mit ineinander verschiebbaren inneren und äusseren Wellenelementen**
Shaft assembly with inner and outer shaft elements which can be moved into each other
Agencement d'arbres doté d'éléments d'arbres internes et externes mobiles les uns à l'intérieur des autres

(30) Priorität: 25.07.2008 DE 102008034774
(43) Veröffentlichungstag der Anmeldung: 27.01.2010
(73) Patentinhaber: BMW AG, 80809 München (DE); Heinrich Müller Maschinenfabrik GmbH, 75179 Pforzheim (DE)
(72) Erfinder: Schneider, Franz, 80937 München (DE); Müller, Frank, Dr., 76227 Karlsruhe (DE); Seiler, Torsten, 71701 Schwieberingen (DE); Machat, Ludwig, 75217 Birkenfeld (DE)
(74) Vertreter: Söllner, Udo

(56) Entgegenhaltungen:
- EP-A2- 1 350 970
- GB-A- 2 172 376
- US-A- 4 807 351
- US-A1- 2003 129 022
- US-B1- 6 193 612
- US-B1- 6 484 384

## Beschreibung

Die vorliegende Erfindung betrifft eine Wellenanordnung mit mindestens zwei ineinander verschiebbaren inneren und äußeren Wellenelementen, die zur Drehmomentübertragung profiliert ausgebildet und miteinander verbunden sind und Mittel aufweisen, die das axiale Ineinanderschieben der Wellenelemente nach dem Erreichen eines vorbestimmten Schwellenwertes einer auf die Wellenelemente wirkenden Axialkraft gestatten.

Eine gattungsgemäße Wellenanordnung kann im Triebstrang eines Kraftfahrzeugs vorgesehen sein und zwar innerhalb einer Gelenkwellenanordnung integriert, mit der ein Abtriebsmoment eines Antriebsmotors in der Form beispielsweise einer Brennkraftmaschine des Kraftfahrzeuges zu beabstandet von dem Antriebsmotor vorgesehenen Antriebsrädern des Kraftfahrzeugs übertragen wird.

Ein solches Kraftfahrzeug muss unter Sicherheitsgesichtspunkten mit einer Wellenanordnung versehen sein, die im Falle eines Aufprallunfalles ein seitliches Ausknicken der Wellenanordnung vermeidet, um eine Intrusion der Wellenanordnung in den Fahrgastraum des Kraftfahrzeuges zu vermeiden. Ein Aspekt einer solchen Wellenanordnung ist auch, dass im Falle des Aufprallunfalls über die Wellenanordnung keine wesentlichen Axialkräfte in Richtung zum Fahrzeugheck übertragen werden, d.h. das Fahrzeug mit Allradantrieb soll sich im Crashfall wie ein Fahrzeug mit Frontantrieb verhalten.

Anhand der DE 10 2004 043 621 A1 ist eine teleskopierbare Wellenanordnung bekannt geworden, die für ein Fahrzeug mit Frontmotor und Heckantrieb vorgesehen ist und auch als "Slip-in-tube-Gelenkwelle" bezeichnet wird. Mit dieser bekannten Wellenanordnung soll eine Verformung der Wellenanordnung mit einer dadurch bedingten Gefahr des seitlichen Ausknickens vermieden werden.

Diese Druckschrift beschreibt eine Wellenanordnung mit ineinander verschiebbaren inneren und äußeren Wellenelementen, die zur Drehmomentübertragung profiliert ausgebildet und miteinander verbunden sind. Um das Abtriebsmoment des. Antriebsmotors in Richtung zu den angetriebenen Hinterrädern des Fahrzeugs zu übertragen, ist diese bekannte Wellenanordnung mit einer Schiebeverzahnung ausgebildet, mit der eine Drehmomentübertragung zwischen dem Innenrohr beziehungsweise inneren Wellenelement und dem Außenrohr beziehungsweise äußeren Wellenelement möglich ist.

Bei dieser bekannten Wellenanordnung kommt es zu einem axialen Ineinanderschieben der Wellenelemente, wenn auf die Wellenelemente eine Axialkraft wirkt, die größer ist als ein vorbestimmter Schwellenwert. Um nun diesen definierten Schwellenwert der Axialkraft zu erreichen, sind bei dieser bekannten Wellenanordnung längs verlaufende Wulste vorgesehen, die eine Klemmkraft zwischen dem inneren und dem äußeren Wellenelement bei der Montage der bekannten Wellenanordnung erzeugen, so dass das axiale Ineinanderschieben der Wellenelemente dann geschehen kann, wenn im Falle eines Unfalls eine Axialkraftbeauf schlagung auf die Wellenanordnung mit einer Kraft stattfindet, die größer ist als die Klemmkraft zwischen den inneren und äußeren Wellenelementen.

Gattungsgemäße Wellenanordnungen werden üblicherweise mittels längs geschweißter Rohre hergestellt, die einem Kaltumformvorgang unterzogen werden, um die für die Drehmomentübertragung zwischen dem Innenrohr und dem Außenrohr notwendige Profilierung an den beiden Rohren auszubilden.

Bei der bekannten Wellenanordnung wird ein geschweißtes und nachgezogenes Innenrohr und Außenrohr mit einem anhand der WO 2005/023454 A1 bekannten Verfahren mit einer längs verlaufenden Schiebeverzahnung versehen. Bei diesem bekannten Verfahren handelt es sich um ein inkrementelles Umformverfahren, bei dem mit Hilfe von Profilrollen das zylindrische Rohr auf einen Profildom schrittweise aufgeformt wird. Der für die Axialkräfte oder Verschiebekräfte verantwortlich tragende Bereich wird am Innenrohr im Zahngrund mittels leichten Überhöhungen, den vorstehend erwähnten Wulsten, realisiert.

Um eine formstabile Verzahnungskontur zwischen dem Innenrohr und dem Außenrohr zu erreichen, werden die Zahnflanken stark umgeformt ausgebildet. Es bedeutet dies mit anderen Worten, dass das Verhältnis der Wandstärke des Rohrs im Flankenbereich zur Ausgangswandstärke deutlich kleiner als eins ist.

Der beschriebene Umformvorgang führt zu steil ausgebildeten Zahnflankenwinkeln, die aufgrund vorhandener Fertigungstoleranzen im Flankenspiel zwischen dem Innenrohr und dem Außenrohr zu einer Geräuschbildung führen. Dies tritt insbesondere bei Torsionswechsellasten auf, also beim Übergang vom Schubbetrieb in den Zugbetrieb und umgekehrt. Jeder Torsionslastwechsel führt daher dazu, dass zunächst das Spiel zwischen den Zahnflanken des Innenrohrs und des Außenrohrs überwunden wird, um dann zum stoßartigen Auftreffen der Zahnflanken zu führen, was zu einem als "Pling" wahrnehmbaren Geräusch führt.

Dieses Geräusch entsteht dabei dadurch, dass die Zahnflanken im Bereich des Flankenspiels leicht gegeneinander verdrehbar sind und, nachdem beide Zahnflanken zur Anlage gekommen sind, es zu einem steilen Anstieg im Momentenverlauf kommt und somit ein abruptes Anschlagen der Zahnflanken aufeinander zu dem vorstehend beschriebenen "Pling" Geräusch führt.

Die als Ausgangsmaterial dienenden längsnahtgeschweißten Rohre werden üblicherweise mittels induktiver Erwärmung der Schweißstoße hergestellt, bei denen der radial innen liegende und außen liegende Stoß mittels Abschabens entfernt wird. Durch die Schweißverbindung kommt es in der Schweißnaht zu einer Gefügeveränderung und es kann zur Ausbildung einer Ferritlinie kommen, die kleinste Unreinheiten aufweisen kann und ein anderes Härteverhalten zeigt, als das umgebende Rohrmaterial.

Die vorstehend erwähnte starke Umformung im Bereich der Zahnflanken führt in Kombination mit den eingesetzten längsnahtgeschweißten Rohren dazu, dass die Zahnflanken in den Bereich der Schweißnaht zu liegen kommen können. Damit unterliegt die Schweißnaht beim Umformen mittels des beschriebenen Herstellungsverfahrens und der Änderungen der Wandstärke des Rohres starken Scherdehnungen und Längsdehnungen, so dass eine Gefahr der Rissbildung im Bereich der Schweißnaht beim Umformvorgang entsteht.

Eine Wellenanordnung nach dem Oberbegriff des Anspruchs 1 zeigt die Druckschrift US 6,484,384 B1.

Anhand dieser Druckschrift ist eine Wellenanordnung bekannt geworden mit zwei ineinander verschiebbaren Wellenelementen, die zur Drehmomentübertragung mit in Umfangsrichtung alternierend konvex und konkav profiliert ausgebildeten und sich in Längsrichtung der Wellenelemente erstreckenden und aneinander angeordneten Mantelflächenbereichen versehen sind und Mittel aufweisen, die das axiale ineinanderschieben der Wellenelemente nach dem Erreichen eines vorbestimmten Schwellenwertes einer auf die Wellenelemente wirkenden Axialkraft gestatten.

Anhand der Beschreibung der einzelnen Verfahrensschritte erfolgt die Ausbildung der bekannten Wellenanordnung derart, dass sowohl die konkaven als auch die konvexen Bereiche des inneren und äußeren Wellenelements aneinander anliegen, dazwischen also kein Spiel vorgesehen ist.

Zur Fertigstellung der bekannten Wellenanordnung wird nach der Ausbildung des äußeren Wellenelements das innere Wellenelement in das äußere Wellenelement eingeführt und dann mittels eines mechanischen Umformvorgangs, einer elektromagnetischen Impulsumformung, einem Hydroformvorgang und dergleichen an die Innenkontur des äußeren Wellenelements angepasst. Damit liegt die Außenkontur des inneren Wellenelements an der Innenkontur des äußeren Wellenelements an.

Ausgehend hiervon liegt der vorliegenden Erfindung die technische Aufgabe zu Grunde, die zum Ineinanderschieben der Wellenelemente erforderliche Axialkraft durch eine entsprechende Ausgestaltung der Wellenelemente in vorbestimmbarer Weise einstellen zu können.

Zudem soll die Wellenanordnung derart Weitergebildet werden, dass das Problem der Geräuschbildung bei Torsionswechsellasten vermieden wird und darüber hinaus die Gefahr des Ausgehens von Rissen aus der Längsschweißnaht beim Umformvorgang der Wellenelemente reduziert wird.

Die Erfindung schafft nun zur Lösung dieser Aufgabe eine Wellenanordnung mit den im Anspruch 1 angegebenen Merkmalen. Vorteilhafte Ausgestaltungen hiervon sind in den weiteren Ansprüchen beschrieben.

Die Erfindung sieht eine Wellenanordnung mit mindestens zwei ineinander verschiebbaren inneren und äußeren Wellenelementen vor, die zur Drehmomentübertragung profiliert ausgebildet und miteinander verbunden sind und Mittel aufweisen, die das axiale Ineinanderschieben der Wellenelemente nach dem Erreichen eines vorbestimmten Schwellenwertes einer auf die Wellenelemente wirkenden Axialkraft gestatten, wobei die Wellenelemente Mantelflächen besitzen, die in Umfangsrichtung alternierend konvex und konkav ausgebildete und sich in Längsrichtung der Mantelfläche erstreckende Mantelflächenbereiche aufweisen und die konvexen und/oder konkaven Mantelflächenbereiche mit einer die Axialkraft erzeugenden Überdeckung aneinander angeordnet sind.

Die Erfindung sieht daher eine Wellenanordnung vor, bei der die inneren und äußeren Wellenelemente mit sich in Längsrichtung der Mantelfläche der Wellenelemente erstreckenden Mantelflächenbereichen ausgebildet sind, die alternierend konvex, also nach außen gewölbt und konkav, also nach innen gewölbt ausgebildet sind. Damit besitzen die Wellenelemente in einer Ansicht auf die Stirnseite der Wellenelemente eine polygonale Struktur mit sanften Übergangsbereichen zwischen den konvexen und konkaven Mantelflächenbereichen, die das Problem der Rissbildung im Bereich der Schweißnaht zu beseitigen hilft.

Im Gegensatz zu den bekannten, mit Zahnflanken ausgebildeten Wellenelementen, kommt es nämlich beim Umformvorgang des längsnahtgeschweißten Ausgangsmaterials in Form von Rohren bei der Bildung der konvexen und konkaven Mantelflächenbereiche nicht zu der starken Streckung, die im Bereich des Zahnflankengrundes bei der Herstellung der bekannten teleskopierbaren Wellenanordnung auftritt. Das polygonförmige Profil der sanft geschwungenen konvexen und konkav ausgebildeten Mantelflächenbereiche sorgt daher dafür, dass auch im Falle des Auftretens eines Übergangsbereichs zwischen einem konvexen und einem konkaven Bereich im Bereich der Schweißnaht, die Gefahr des Anreißens oder des Ausgehens von Rissen in der Schweißnaht verringert ist.

Um nun dafür zu sorgen, dass für das Ineinanderschieben der inneren und äußeren Wellenelemente eine Axialkraft erforderlich ist, die größer ist als eine vorbestimmte Schwellenwertskraft, ist es nach der Erfindung vorgesehen, dass die konvexen und/oder konkaven Mantelflächenbereiche mit einer die Axialkraft erzeugenden Überdeckung aneinander angeordnet sind.

Es bedeutet dies mit anderen Worten, dass nach der Erfindung die nach außen gewölbten Mantelflächenbereiche der inneren und äußeren Wellenelemente mit einer Überdeckung aneinander angeordnet werden, oder die nach innen gerichtet gewölbten, konkaven Mantelflächenbereiche mit einer Überdeckung zueinander angeordnet werden, oder auch sowohl die konvexen als auch die konkaven Mantelflächenbereiche bei der Anordnung der inneren und äußeren Wellenelemente aneinander eine Überdeckung besitzen.

Die Überdeckung sorgt dafür, dass die mit Überdeckung aneinander liegenden Bereiche unter Vorspannung aufeinander liegen, so dass das Ineinanderschieben der inneren und äußeren Wellenelemente nur dann möglich ist, wenn auf die Wellenelemente eine Axialkraft wirkt, die größer ist als die aus der Vorspannung resultierende Reibkraft zwischen den inneren und äußeren Wellenelementen.

Die konvexen und konkaven Mantelflächenbereiche der inneren und äußeren Wellenelemente sorgen dafür, dass zwischen den inneren und äußeren Wellenelementen ein Drehmoment übertragen werden kann, ähnlich der Wirkung einer Verzahnung, aber die mit der Ausbildung der Verzahnung verbundenen Probleme am längsnahtgeschweißten Rohr vermieden werden.

In einer Weiterbildung der Erfindung ist es vorgesehen, dass die konvexen Mantelflächenbereiche mit Überdeckung ausgebildet sind und die konkaven Mantelflächenbereiche spielbehaftet ausgebildet sind. Es bedeutet dies mit anderen Worten, dass die konvexen Mantelflächenbereiche der inneren und äußeren Wellenelemente so gefertigt werden, dass sie im Rohzustand, d.h. also in dem Zustand, bevor die inneren und äußeren Wellenelemente zur Bildung der Wellenanordnung bei der Herstellung ineinander geschoben werden, eine Überdeckung zueinander besitzen und die konkaven Mantelflächenbereiche mit Spiel zueinander ausgebildet werden, so dass also im unmontierten Zustand der Wellenanordnung die konkaven Mantelflächenbereiche der Wellenelemente mit Spiel zueinander gefertigt werden.

Bei der Herstellung der Wellenanordnung werden dann die inneren Wellenelemente in die äußeren Wellenelemente eingeschoben, so dass die mit Überdeckung zueinander ausgebildeten Mantelflächenbereiche für die Ausbildung der Vorspannung zwischen den inneren und äußeren Wellenelementen sorgen und die spielbehafteten konkaven Mantelflächenbereiche eine leichte Montage der Wellenanordnung aus den getrennt gefertigten Wellenelementen zulassen.

Bei der Montage der Wellenanordnung aus den einzelnen Wellenelementen kann dann im Bereich der spielbehaftet ausgebildeten Mantelflächenbereiche eine Kontaktierung zwischen diesen Mantelflächenbereichen stattfinden, diese also bei der fertig gestellten Wellenanordnung leicht aneinander aufliegen oder aber nach wie vor ein Spiel zwischen den spielbehaftet ausgebildeten Mantelflächenbereichen auch im montierten Zustand der Wellenanordnung gegeben ist. Die mit Überdeckung ausgebildeten Mantelflächenbereiche sorgen in jedem Fall dafür, dass durch die Vorspannung zwischen diesen Mantelflächenbereichen eine Kraftbeaufschlagung der inneren und äußeren Wellenelemente mit einer Axialkraft erforderlich ist, die größer ist als der vorbestimmte Schwellenwert, so dass im Falle einer Axialkraftbeaufschlagung der Wellenanordnung, beispielsweise bei einem Unfall, die inneren und äußeren Wellenelemente ineinander geschoben werden, ohne dass die Gefahr eines seitlichen Ausknickens der Wellenanordnung besteht.

Über eine entsprechende Steuerung der mit Überdeckung zueinander ausgebildeten Mantelflächenbereiche kann in Verbindung mit einer Einflussnahme auf den Reibfaktor im Kontaktbereich der mit Überdeckung ausgebildeten Mantelflächenbereiche sowie der Passung dazwischen die Axialkraft eingestellt werden. Nach einer Weiterbildung der Erfindung ist es vorgesehen, dass die mit Überdeckung ausgebildeten Bereiche etwa 20 bis 50 Prozent des Umfangs der Wellenelemente darstellen, vorzugsweise etwa 20 bis 40 Prozent des Umfangs der Wellenelemente darstellen und weiter vorzugsweise etwa 22 bis 33 Prozent des Umfangs der Wellenelemente darstellen.

Es bedeutet dies mit anderen Worten, dass bei einer bevorzugten Ausführungsform der Wellenanordnung etwa 22 bis 33 Prozent des Umfangs der Wellenelemente mit mit Überdeckung ausgebildeten Mantelflächenbereichen versehen sind. Diese Mantelflächenbereiche sorgen dann bei der fertig montierten Wellenanordnung dafür, dass eine Axialkraft erforderlich ist, die größer ist als der bereits erwähnte vorbestimmte Schwellenwert, um das Ineinanderschieben der Wellenelemente zu erreichen.

Vorstehend wurde ausgeführt, dass das Problem der Rissbildung in der Schweißnaht von der starken Umformung im Zahnfußgrund der bekannten Wellenanordnung herrührt. Diese Problematik kann aufgrund des sanften Übergangs zwischen den konvexen und konkaven Mantelflächenbereichen der erfindungsgemäßen Wellenanordnung vermieden werden.

Darüber hinaus ist es nach einer Weiterbildung der Erfindung vorgesehen, dass die Mantelflächenbereiche ohne Unstetigkeitsstellen ausgebildet sind. Es bedeutet dies mit anderen Worten, dass an der gesamten Mantelfläche der Wellenelemente zur Bildung der Wellenanordnung keine Unstetigkeitsstellen vorhanden sind, die Steigung der Mantelfläche der inneren und äußeren Wellenelemente also keine sprunghaften Veränderungen aufweist, wie dies bei der bekannten Wellenanordnung im Grund der Zahnflanken der Fall ist.

Bei der erfindungsgemäßen Wellenanordnung liegen die mit Überdeckung ausgebildeten Mantelflächenbereiche der inneren und äußeren Wellenelemente zur Einstellung der Axialkraft aneinander an. Dies sorgt auch gleichzeitig dafür, dass bei der Belastung der erfindungsgemäßen Wellenanordnung im Triebstrang eines Fahrzeugs mit einer Torsionswechsellast die eingangs geschilderte Problematik der Entstehung unerwünschter Geräusche bei der Überwindung des Umkehrspiels zwischen den Zahnflanken der inneren und äußeren Wellenelemente, wie dies bei der bekannten Wellenanordnung der Fall ist, nicht mehr auftritt. Damit wurde einerseits der Problematik der unerwünschten Geräuschbildung Rechnung getragen und andererseits auch der Problematik der Rissbildung im Bereich der Schweißnaht, da starke, die Rissbildung begünstigende Wandstärkeveränderungen der Ausgangsmaterialien in Form der längsnahtgeschweißten Rohre zur Bildung der inneren und äußeren Wellenelemente bei der erfindungsgemäßen Wellenanordnung in Wegfall geraten.

Nach einer Weiterbildung der erfindungsgemäßen Wellenanordnung ist es vorgesehen, dass die Mantelflächen der inneren und äußeren Wellenelemente jeweils acht konvex und acht konkav ausgebildete Mantelflächenbereiche besitzen. Diese Konfiguration hat sich als vorteilhaft herausgestellt und begünstigt eine kostengünstige Fertigung der erfindungsgemäßen Wellenanordnung.

Vorstehend wurde ausgeführt, dass die inneren und äußeren Wellenelemente so gefertigt werden, dass spielbehaftete Mantelflächenbereiche zwischen den inneren und äußeren Wellenelementen vorliegen.

Nach einer Weiterbildung der Erfindung ist es vorgesehen, dass das Spiel spielbehaftet aneinander angeordneter Mantelflächenbereiche derart ausgebildet ist, dass bei der Übertragung von Torsionswechsellasten eine Anregung zur Geräuschemission zumindest weitgehend vermieden ist. Es bedeutet dies mit anderen Worten, dass bei der Fertigung der Wellenelemente dafür Sorge getragen wird, dass das Spiel zwischen Mantelflächenbereichen der inneren und äußeren Wellenelemente, die zur späteren Anordnung aneinander vorgesehen sind, so eingestellt wird, dass die bei der bekannten Wellenanordnung auftretende negative Anregung zur Geräuschemission bei Torsionswechsellasten zumindest weitgehend vermieden ist.

Zu diesem Zweck kann beispielsweise das Spiel zwischen den spielbehafteten Mantelflächenbereichen so eingestellt werden, dass nach einer Montage der inneren und äußeren Wellenelemente zur fertig gestellten Wellenanordnung zwischen den ursprünglich spielbehaftet ausgebildeten Mantelflächenbereichen eine mit einem Spiel von weitgehend 0 stattfindende Kontaktierung zwischen diesen Mantelflächenbereichen gegeben ist und somit eine Geräuschemission beim Belasten der Wellenanordnung mit einer Torsionswechsellast vollständig vermieden ist.

Nach einer Weiterbildung der Erfindung ist es vorgesehen, dass die Überdeckung von Mantelflächenbereichen zwischen inneren und äußeren Wellenelementen derart ausgebildet ist, dass der vorbestimmte Schwellenwert einen Wert im Bereich von 4 Kilonewton (kN) bis 20 Kilonewton (kN) besitzt. Die Überdeckung der Mantelflächenbereiche wird also so ausgewählt, dass sich die inneren und äußeren Wellenelemente axial ineinander verschieben lassen, wenn die Wellenanordnung mit einer Axialkraft von mehr als 4 kN bis 20 kN belastet wird. Bei einer entsprechenden Kraftbeaufschlagung wird dann das innere Wellenelement in das äußere Wellenelement eingeschoben und die Gefahr eines seitlichen Ausknickens der Wellenanordnung vermieden.

Nach einer Ausführungsform gemäß der vorliegenden Erfindung ist es vorgesehen, dass die zur Ausbildung von mit Überdeckung angeordneten Mantelflächenbereiche eines inneren Wellenelements vor der Anordnung zur Wellenanordnung im äußeren Wellenelement ein Übermaß im Bereich von 1,3 bis 2,3 Promille des Wellenelementgrunddurchmessers relativ zu korrespondierenden Mantelflächenbereichen des äußeren Wellenelements besitzen. Wenn die zur Anordnung mit Überdeckung ausgebildeten Mantelflächenbereichen des inneren Wellenelements die konvex ausgebildeten Mantelflächenbereiche sind, so stellt der Wellenelementgrunddurchmesser den größten Abstand zweier symmetrisch zum Mittelpunkt des inneren Wellenelements am Außenumfang des inneren Wellenelements einander gegenüber liegender Punkte dar.

Dieser Wellenelementgrunddurchmesser weist nun zu einem korrespondierenden Wellenelementgrunddurchmesser korrespondierender Mantelflächenbereiche des äußeren Wellenelements ein Übermaß im Bereich von 1,3 bis 2,3 Promille auf. Dieser Wertebereich hat sich als vorteilhaft zur Ausbildung des Schwellenwerts für die Axialkraft herausgestellt, nach deren Überschreiten die beiden inneren und äußeren Wellenelement ineinander geschoben werden können.

Die vorliegende Erfindung schafft auch ein Verfahren zur Herstellung einer Wellenanordnung, wie sie vorstehend beschrieben worden ist, mit folgenden Schritten:

Ein rohrstückförmiges erstes Wellenelement wird mittels eines acht konvexe und acht konkave Mantelflächenbereiche aufweisenden Profildorns aufgeweitet, sodann wird das erste Wellenelement zusammen mit dem Profildom durch eine innere Ausnehmung einer acht konvexe und acht konkave Mantelflächenbereiche aufweisenden Matrize hindurchgeführt und ein rohrstückförmiges zweites Wellenelement wird in eine innere Ausnehmung einer acht konvexe und acht konkave Mantelflächebereiche aufweisenden Matrize hineingeführt und durch das in der Matrize angeordnete zweite Wellenelement wird ein acht konvexe und acht konkave Mantelflächenbereiche aufweisender Profildorn hindurchgeführt und sodann das erste Wellenelement in das zweite Wellenelement eingeführt derart, dass die konvexen und konkaven Mantelflächenbereiche der Wellenelemente einander entsprechend angeordnet sind.

Die konvexen und konkaven Mantelflächenbereiche des ersten, inneren Wellenelements werden dabei mit vorgesehenem Übermaß beziehungsweise vorgesehenem Spiel relativ zu den konvexen und konkaven Mantelflächenbereichen des zweiten, äußeren Wellenelements ausgebildet, so dass sich nach der Montage des inneren im äußeren Wellenelements der vorstehend erwähnte Schwellenwert der Axialkraft von etwa 4 kN bis etwa 20 kN einstellt, nach dessen Überschreiten die beiden Wellenelemente ineinander geschoben werden können.

Die Erfindung wird im folgenden anhand der Zeichnung näher erläutert. Diese zeigt in:
Fig. 1 einen teilweise geschnittenen Ausschnitt einer Gelenkwellenanordnung für ein Kraftfahrzeug mit einer Ausführungsform einer Wellenanordnung nach der vor liegenden Erfindung;
Fig. 2 eine vergrößerte Darstellung der Wellenanordnung nach Fig. 1;
Fig. 3 eine Querschnittsansicht der Wellenanordnung nach Fig. 2; und
Fig. 4 eine vergrößerte Darstellung des Ausschnitts "B" nach Fig. 3.

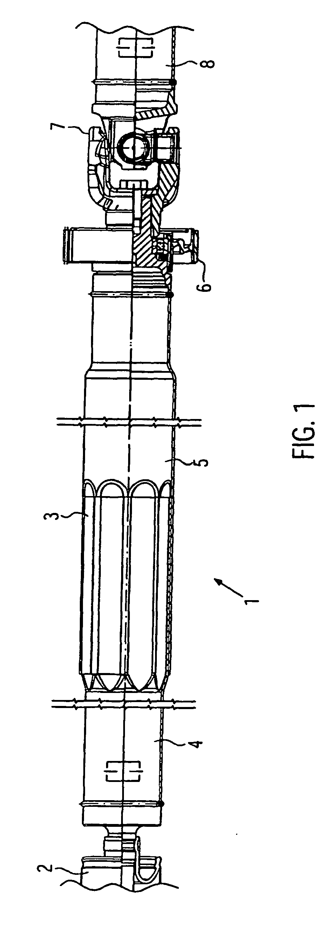

Fig. 1 der Zeichnung zeigt einen Ausschnitt einer Gelenkwellenanordnung 1 für einen Personenkraftwagen mit quer eingebautem Frontmotor mit Frontantrieb und zusätzlichem Heckantrieb mittels der Gelenkwellenanordnung 1.

Die Gelenkwellenanordnung 1 weist ein Gelenkstück 2 auf, über die ein Abtriebsmoment des nicht dargestellten Frontmotors in die Gelenkwellenanordnung 1 eingetragen werden kann. Diese besitzt eine teleskopierbare Wellenanordnung 3 mit einem inneren Wellenelement 4 sowie einem äußeren Wellenelement 5.

An das äußere Wellenelement 5 schließt sich von links nach rechts aus betrachtet ein Mittellager 6 an, über das die Gelenkwellenanordnung 1 am Fahrzeug festgelegt werden kann und ein Kreuzgelenk 7, an das sich dann eine hintere Wellenanordnung 8 anschließt.

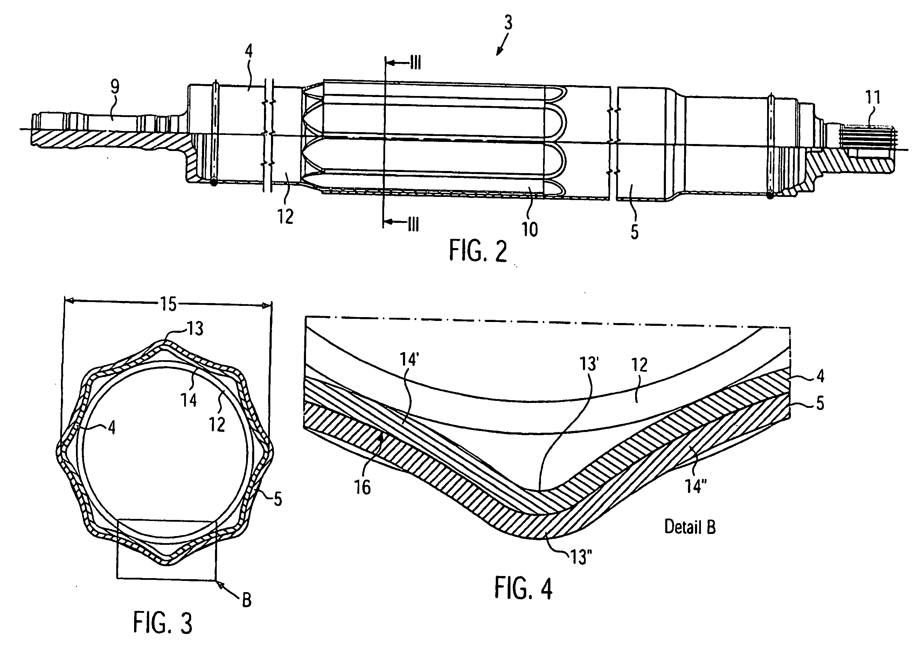

Fig. 2 der Zeichnung zeigt in einer vergrößerten Darstellung die Wellenanordnung 3 mit dem inneren, oder ersten Wellenelement 4 sowie dem äußeren, oder zweiten Wellenelement 5.

Über ein Wellenende 9 wird in das innere Wellenelement 4 ein Abtriebsmoment des Antriebsmotors über eine nicht dargestellte Innenverzahnung eingeleitet, von dem inneren Wellenelement 4 über das zur Drehmomentübertragung ausgebildete Profil 10 auf das äußere Wellenelement 5 übertragen und von dort über das mit einer Längsverzahnung ausgebildete zweite Wellenende 11 auf das Kreuzgelenk 7 übertragen.

Das zur Drehmomentübertragung ausgebildete Profil 10 der Wellenanordnung 3 ist näher anhand des in Fig. 3 dargestellten Schnitts gemäß III - III nach Fig. 2 ersichtlich.

In der Zeichnung in Fig. 3 innerhalb des inneren Wellenelements 4 dargestellt ist eine Kreisringkontur 12 ersichtlich, die das vordere Wellenende des inneren Wellenelements 4 darstellt, welches in das mit der Innenverzahnung zur Momentenübertragung ausgestattete erste Wellenende 9 übergeht.

Wie es ohne weiteres in Fig. 3 der Zeichnung ersichtlich ist, weisen das innere Wellenelement 4 und das äußere Wellenelement 5 ein polygonförmiges Profil auf, über das einerseits die Momentenübertragung zwischen dem inneren Wellenelement 4 und dem äußeren Wellenelement 5 stattfindet und welches anderseits dafür sorgt, dass das innere Wellenelement 4 in das äußere Wellenelement 5 eingeschoben werden kann, wenn eine die Wellenanordnung 3 in Axiallängsrichtung beaufschlagende Axialkraft größer ist als ein vorbestimmter Schwellenwert, der bei der dargestellten Ausführungsform etwa 14 kN beträgt.

Bei der dargestellten Ausführungsform besitzen das innere Wellenelement 4 und das äußere Wellenelement 5 jeweils acht konvex ausgebildete Mantelflächenbereiche 13 und acht konkav ausgebildete Mantelflächenbereiche 14.

Bei der dargestellten Ausführungsform sind die konvex ausgebildeten Wandflächenbereiche 13' des inneren Wellenelements 4 mit Übermaß relativ zu den konvexen Mantelflächenbereichen 13" des äußeren Wellenelements 5 ausgebildet, wobei sich dies anhand von Fig. 4 der Zeichnung ergibt.

Der Schwellenwert für die Axialkraft, ab der das innere Wellenelement 4 relativ zum äußeren Wellenelement 5 axial verschoben werden kann, wird durch eine entsprechende Einstellung des Wellenelementgrunddurchmessers 15 (siehe Fig. 3) zum entsprechenden inneren Wellenelementgrunddurchmesser des äußeren Wellenelements 5 eingestellt.

Bei der dargestellten Ausführungsform besitzt das innere Wellenelement 4 einen Wellenelementgrunddurchmesser, der um 1,5 Promille größer ist als der zugehörige innere Wellenelementgrunddurchmesser des äußeren Wellenelements 5.

In dem sich an den konvexen Mantelflächenbereich 13', 13" anschließenden konkaven Mantelflächenbereich 14' des inneren Wellenelements 4 beziehungsweise 14" des äußeren Wellenelements 5 ist zwischen dem Mantelflächenbereich 14' und dem Mantelflächenbereich14" eine spielbehaftete Ausbildung und Anordnung der konkaven Mantelflächenbereiche 14' und 14" vorgesehen. Es bedeutet dies mit anderen Worten, dass zwischen dem inneren konkaven Mantelflächenbereich 14' und dem äußeren konkaven Mantelflächenbereich 14" ein Spiel 16 vorgesehen ist, welches bei der dargestellten Ausführungsform etwa 0,04 mm beträgt.

Wird nun über das erste Wellenende 9 in das innere Wellenelement 4 ein Antriebsmoment eingetragen, so kann dieses Antriebsmoment über das mit konvexen und konkaven Mantelflächenbereichen ausgebildete Profil 10 der Wellenanordnung 3 in das äußere Wellenelement 5 und von diesem über das mit einer Längsverzahnung ausgebildete zweite Wellenende 11 in Richtung zum Kreuzgelenk 7 übertragen werden. Die Kraftübertragung erfolgt dabei weitgehend inner halb des mit Überdeckung ausgebildeten konvexen Mantelflächenbereich 13' beziehungsweise 13" des inneren Wellenelements 4 beziehungsweise äußeren Wellenelements 5. Die bei der dargestellten Ausführungsform zur Verfügung stehenden acht konvexen Mantelflächenbereiche sorgen aufgrund ihrer Überdeckung dafür, dass bei der Momentenübertragung eine Anregung zur Geräuschemission auch bei Torsionswechsellasten wirksam vermieden wird.

Bei der Herstellung der erfindungsgemäßen Wellenanordnung muss nicht dafür Sorge getragen werden, dass die Umformung zur Ausbildung eines konvexen oder konkaven Mantelflächenbereichs selbst in einem Bereich mit größter Krümmung nicht in eine längs verlaufende Schweißnaht eines rohrförmigen Ausgangsmaterials gelangt, da auch bei der Umformung im Bereich der Schweißnaht keine Rissgefahr von der Schweißnaht ausgeht, da die Umformung im gesamten Mantelflächenbereich weich und ohne Sprungstellen und ohne Unstetigkeitsstellen abläuft und somit auch die Problematik der Rissgefahr ausgehend von der Längschweißnaht des rohrförmigen Ausgangsmaterials wirksam vermieden ist.

Die weiche polygonförmige Ausgestaltung der Wellenelemente sorgt dafür, dass ein zur Geräuschentwicklung führendes hartes Aufeinandertreffen der Profilflanken der inneren und äußeren Wellenelemente vermieden wird. Wird über die erfindungsgemäße Wellenanordnung ein Torsionsmoment übertragen, so führt dies in den aneinander anliegenden Mantelflächenbereichen der inneren und äußeren Wellenelemente zu einem Anstieg der Flächenpressung, so dass die Verdrehkräfte deutlich, aber gleichmäßig ansteigen und die Anlagebereiche zwischen den inneren und äußeren Wellenelementen auf der Belastungsseite zunehmen. Durch die weiche, polygonförmige Gestaltung der momentenübertragenden Profile liegen aber keine Bereiche vor, in denen die Schweißnaht einer Scherbeanspruchung unterliegt. Der zu der weichen, polygonförmigen Gestaltung der Profile führende Umformvorgang führt im Vergleich zu den bekannten Herstellungsverfahren zu deutlich weniger Wandstärkenminderung, was auch dazu führt, dass die Rissgefahr im Bereich der Längsschweißnaht verringert beziehungsweise vermieden werden kann.

Die erfindungsgemäße Wellenanordnung zeichnet sich auch dadurch aus, dass sie an einem Fahrzeug zum Einsatz kommen kann, das als Fahrzeug mit Frontantrieb ausgelegt ist und bei dem ein zusätzlicher Heckantrieb optional möglich ist.

Hinsichtlich vorstehend im Einzelnen nicht näher erläuterter Merkmale der Erfindung wird im übrigen ausdrücklich auf die Ansprüche und die Zeichnung verwiesen.

### Bezugszeichenliste

- 1: Gelenkwellenanordnung
- 2: Gelenkstück
- 3: Wellenanordnung
- 4: inneres Wellenelement
- 5: äußeres Wellenelement
- 6: Mittellager
- 7: Kreuzgelenk
- 8: hintere Wellenanordnung
- 9: erstes Wellenende
- 10: Profil
- 11: zweites Wellenende
- 12: Kreisringkontur
- 13: konvexer Mantelflächenbereich
- 13': innerer konvexer Mantelflächenbereich
- 13": äußerer konvexer Mantelflächenbereich
- 14: konkaver Mantelflächenbereich
- 14': innerer konkaver Mantelflächenbereich
- 14": äußerer konkaver Mantelflächenbereich
- 15: Wellenelementgrunddurchmesser
- 16: Spiel

## Patentansprüche

1. Wellenanordnung mit mindestens zwei ineinander verschiebbaren inneren und äußeren Wellenelementen (4, 5), die zur Drehmomentübertragung mit in Umfangsrichtung alternierend konvex und konkav profiliert ausgebildeten und sich in Längsrichtung der Wellenelemente erstreckenden und aneinander angeordneten Mantelflächenbereichen versehen sind und Mittel aufweisen, die das axiale Ineinanderschieben der Wellenelemente (4, 5) nach dem Erreichen eines vorbestimmten Schwellenwertes einer auf die Wellenelemente (4, 5) wirkenden Axialkraft gestatten, **dadurch gekennzeichnet, dass** die konvexen und/oder konkaven Mantelflächenbereiche (13,14) mit einer die Axialkraft erzeugenden Überdeckung aneinander angeordnet sind.

2. Wellenanordnung nach Anspruch 1, **dadurch gekennzeichnet, dass** die konvexen Mantelflächenbereiche (13) mit Überdeckung ausgebildet sind und die konkaven Mantelflächenbereiche (14) spielbehaftet ausgebildet sind.

3. Wellenanordnung nach Anspruch 1 oder 2, **dadurch gekennzeichnet, dass** die mit Überdeckung ausgebildeten Bereiche etwa 20 bis 50 Prozent des Umfangs der Wellenelemente (4, 5) darstellen, vorzugsweise etwa 20 bis 40 Prozent des Umfangs der Wellenelemente (4, 5) darstellen, weiter vorzugsweise etwa 22 bis 33 Prozent des Umfangs der Wellenelemente (4, 5) darstellen.

4. Wellenanordnung nach einem der vorstehenden Ansprüche, **dadurch gekennzeichnet, dass** die Mantelflächenbereiche (13, 14) ohne Unstetigkeitsstellen ausgebildet sind.

5. Wellenanordnung nach einem der vorstehenden Ansprüche, **dadurch gekennzeichnet, dass** die Mantelflächen jeweils acht konvex und acht konkav ausgebildete Mantelflächenbereiche (13, 14) besitzen.

6. Wellenanordnung nach einem der vorstehenden Ansprüche, **dadurch gekennzeichnet, dass** das Spiel (16) spielbehaftet aneinander angeordneter Mantetflächenbereiche (13, 14) derart ausgebildet ist, dass bei der Übertragung von Torsionswechsellasten eine Anregung zur Geräuschemission zumindest weitgehend vermieden ist.

7. Wellenanordnung nach einem der vorstehenden Ansprüche, **dadurch gekennzeichnet, dass** die Überdeckung von Mantelflächenbereichen (13, 14) zwischen inneren und äußeren Wellenelementen (4, 5) derart ausgebildet ist, dass der vorbestimmte Schwellenwert einen Wert im Bereich von 4 kN bis 20 kN besitzt.

8. Wellenanordnung nach einem der vorstehenden Ansprüche, **dadurch gekennzeichnet, dass** die zur Ausbildung von mit Überdeckung angeordneten Mantelflächenbereiche (13, 14) eines inneren Wellenelements (4) vor der Anordnung zur Wellenanordnung im äußeren Wellenelement (5) ein Übermaß im Bereich von 1,3 bis 2,3 Promille des Wellenelementgrunddurchmessers (15) relativ zu korrespondierenden Mantelflächenbereichen des äußeren Wellenelements (5) besitzen.

9. Verfahren zur Herstellung einer Wellenanordnung nach einem der vorstehenden Ansprüche mit folgenden Schritten:
a) - ein rohrstückförmiges erstes Wellenelement (4) wird mittels eines acht konvexe und acht konkave Mantelflächenbereiche aufweisenden Profildoms aufgeweitet
b) - das erste Wellenelement (4) wird zusammen mit dem Profildom durch eine innere Ausnehmung einer acht konvexe und acht konkave Mantelflächenbereiche aufweisenden Matrize hindurch geführt
c) - ein rohrstückförmiges zweites Wellenelement (5) wird in eine innere Ausnehmung einer acht konvexe und acht konkave Mantelflächenbereiche aufweisenden Matrize hinein geführt
d) - durch das in der Matrize angeordnete zweite Wellenelement (5) wird ein acht konvexe und acht konkave Mantelflächenbereiche aufweisende Profildom hindurch geführt
e) - das erste Wellenelement (4) wird in das zweite Wellenelement (5) eingeführt derart, dass die konvexen und konkaven Mantelflächenbereiche der Wellenelemente (4, 5) einander entsprechend angeordnet sind.

## Claims

1. Shaft arrangement with at least two inner and outer shaft elements (4, 5) which can be pushed into each other and are provided with lateral surface regions for torque transmission, which are formed in an alternating convex and concave profiled manner in the circumferential direction and extend in the longitudinal direction of the shaft elements and are arranged on each other, and have means which allow the shaft elements (4, 5) to be pushed axially into each other after a predefined threshold value of an axial force acting on the shaft elements (4, 5) is reached, **characterised in that** the convex and/or concave lateral surface regions (13, 14) are arranged on each other with an overlap which generates the axial force.

2. Shaft arrangement according to Claim 1, **characterised in that** the convex lateral surface regions (13) are formed with an overlap and the concave lateral surface regions (14) are formed with clearance.

3. Shaft arrangement according to Claim 1 or 2, **characterised in that** the regions formed with an overlap constitute approximately 20 to 50 percent of the circumference of the shaft elements (4, 5), preferably approximately 20 to 40 percent of the circumference of the shaft elements (4, 5), further preferably approximately 22 to 33 percent of the circumference of the shaft elements (4, 5).

4. Shaft arrangement according to one of the preceding claims, **characterised in that** the lateral surface regions (13, 14) are formed without discontinuities.

5. Shaft arrangement according to one of the preceding claims, **characterised in that** the lateral surfaces each have eight convex and eight concave lateral surface regions (13, 14).

6. Shaft arrangement according to one of the preceding claims, **characterised in that** the clearance (16) of lateral surface regions (13, 14) which are arranged on each other with clearance is formed in such a manner that excitation to noise emission is at least largely avoided during transmission of torsional alternating loads.

7. Shaft arrangement according to one of the preceding claims, **characterised in that** the overlap of lateral surface regions (13, 14) is formed between inner and outer shaft elements (4, 5) in such a manner that the predefined threshold value has a value in the range from 4 kN to 20 kN.

8. Shaft arrangement according to one of the preceding claims, **characterised in that** the lateral surface regions (13, 14) of an inner shaft element (4), which are arranged with an overlap before being arranged in the outer shaft element (5) for the shaft arrangement, have an excess in the range from 1.3 to 2.3 per mille of the shaft element basic diameter (15) relative to corresponding lateral surface regions of the outer shaft element (5).

9. Method for producing a shaft arrangement according to one of the preceding claims, having the following steps:
a) - a tubular shaped first shaft element (4) is widened by means of a profiled mandrel which has eight convex and eight concave lateral surface regions;
b) - the first shaft element (4), together with the profiled mandrel, is guided through an inner recess of a matrix which has eight convex and eight concave lateral surface regions;
c) - a tubular shaped second shaft element (5) is guided into an inner recess of a matrix which has eight convex and eight concave lateral surface regions;
d) - a profiled mandrel having eight convex and eight concave lateral surface regions is guided through the second shaft element (5) which is arranged in the matrix;
e) - the first shaft element (4) is introduced into the second shaft element (5) in such a manner that the convex and concave lateral surface regions of the shaft elements (4, 5) are arranged in correspondence with each other.

## Revendications

1. Agencement d'arbre comprenant au moins deux éléments d'arbre (4, 5) intérieurs et extérieurs, pouvant coulisser l'un dans l'autre, lesquels, pour la transmission du couple, sont dotés de zones de surface d'enveloppe alternant dans le sens périphérique, profilées en alternance de façon convexe et concave et s'étendant dans le sens longitudinal des éléments d'arbre et disposés les uns contre les autres et présentent des moyens qui permettent l'emboîtement axial des éléments d'arbre (4, 5) après avoir atteint une valeur seuil prédéfinie d'une force axiale agissant sur les éléments d'arbre (4, 5), **caractérisé en ce que** les zones de surface d'enveloppe (13, 14) convexes et/ou concaves sont disposées les unes contre les autres avec un recouvrement générant la force axiale.

2. Agencement d'arbre selon la revendication 1, **caractérisé en ce que** les zones convexes de surface d'enveloppe (13) sont conçues avec un recouvrement et les zones de surfaces d'enveloppe (14) concaves sont conçues avec du jeu.

3. Agencement d'arbre selon la revendication 1 ou 2, **caractérisé en ce que** les zones conçues avec un recouvrement présentent environ 20 à 50 pour cent du pourtour des éléments d'arbre (4, 5), présentent de préférence environ 20 à 40 pour cent du pourtour des éléments d'arbre (4, 5), présentent avec une préférence encore plus grande environ 22 à 33 pour cent du pourtour des éléments d'arbre (4, 5).

4. Agencement d'arbre selon l'une des revendications précédentes, **caractérisé en ce que** les zones de surface d'enveloppe (13, 14) sont conçues sans points de discontinuité.

5. Agencement d'arbre selon l'une des revendications précédentes, **caractérisé en ce que** les surfaces d'enveloppe présentent à chaque fois huit zones de surface d'enveloppe conçues de façon convexe et huit zones de surface d'enveloppe conçues de façon concave (13, 14).

6. Agencement d'arbre selon l'une des revendications précédentes, **caractérisé en ce que** le jeu (16) est conçu entaché de jeu de zones de surface d'enveloppe (13, 14) disposées les unes contre les autres de telle sorte qu'une excitation pour l'émission de bruit est au moins largement évitée lors de la transmission de charges alternatives de torsion.

7. Agencement d'arbre selon l'une des revendications précédentes, **caractérisé en ce que** le recouvrement de zones de surface d'enveloppe (13, 14) entre des éléments d'arbre intérieurs et des éléments d'arbre extérieurs (4, 5) est conçu de telle sorte que la valeur seuil prédéfinie prend une valeur de l'ordre de 4 kN à 20 kN.

8. Agencement d'arbre selon l'une des revendications précédentes, **caractérisé en ce que** les parties, prévues pour la formation de zones de surfaces d'enveloppe (13, 14) disposées avec un recouvrement, d'un élément d'arbre (4) intérieur présentent, avant la mise en place pour l'agencement d'arbre dans l'élément d'arbre (5) extérieur, une surcote de l'ordre de 1,3 à 2,3 pour mille du diamètre de base d'élément d'arbre (15) par rapport à des zones de surface d'enveloppe correspondantes de l'élément d'arbre (5) extérieur.

9. Procédé pour fabriquer un agencement d'arbre selon l'une des revendications précédentes comprenant les étapes suivantes :
a) - un premier élément d'arbre (4) en forme de bout de tuyau est élargi au moyen d'un mandrin pour profilé présentant huit zones de surface d'enveloppe convexes et huit zones de surfaces d'enveloppe concaves
b) - le premier élément d'arbre (4) est guidé conjointement avec le mandrin pour profilé à travers un évidement intérieur d'une matrice présentant huit zones de surface d'enveloppe convexes et huit zones de surface d'enveloppe concaves
c) - un second élément d'arbre (5) en forme de bout de tuyau est guidé à l'intérieur d'un évidement intérieur d'une matrice présentant huit zones de surface d'enveloppe convexes et huit zones de surface d'enveloppe concaves
d) - un mandrin pour profilé présentant huit zones de surface d'enveloppe convexes et huit zones de surface d'enveloppe concaves est guidé à travers le second élément d'arbre (5) disposé dans la matrice
e) - le premier élément d'arbre (4) est introduit dans le second élément d'arbre (5) de telle sorte que les zones de surface d'enveloppe convexes et les zones de surface d'enveloppe concaves des éléments d'arbre (4, 5) sont disposées les unes en fonction des autres.
